# EUROPEAN PATENT SPECIFICATION

(11) **EP 2 710 310 B1**
(45) Date of publication and mention of the grant of the patent: **19.05.2021**
(21) Application number: 11817280.8
(22) Date of filing: 09.12.2011
(51) Int. Cl.: F24S 10/95, F24S 10/40

(54) **SOLAR COLLECTOR WITH HEAT EXCHANGER AND ABSORPTION VACUUM TUBES**
SONNENKOLLEKTOR MIT WÄRMETAUSCHER UND ABSORPTIONSVAKUUMRÖHREN
CAPTEUR SOLAIRE MUNI D'ÉCHANGEUR DE CHALEUR ET DE TUBES À ABSORPTION SOUS VIDE

(30) Priority: 09.12.2010 PL 39319010
(43) Date of publication of application: 26.03.2014
(73) Proprietor: Segit, Jacek Janusz, 01-874 Warszawa (PL)
(72) Inventor: Strojecki, Jaroslaw, deceased (PL); Bialousz, Jerzy Adam, 02-776 Warszawa (PL)
(86) International application number: PCT/PL2011/000130
(87) International publication number: WO 2012/078059

(56) References cited:
- DE-A1-102008 052 964
- DE-A1-102009 040 654
- DE-U1- 9 400 961
- DE-U1-202005 019 024
- DE-U1-202007 018 537
- GB-A- 2 013 870
- US-A- 4 299 203
- US-A1- 2011 253 127

## Description

The present invention relates to a solar collector with the heat exchanger and the absorption vacuum tubes. Two parts may be distinguished in the solar collector with the heat pipe: an absorption part (vacuum tubes sprayed with an absorber and a heat pipe placed inside of it) and a heat exchanger. Solar heat is caught in the absorption part by an absorption layer, and then it is received by the heat pipe, from which the heat is received by a solar fluid by means of a condenser in the heat exchanger.

The absorption vacuum tubes of discussed type are constituted by double transparent vacuum tubes, wherein vacuum is between their walls, like in a Dewar flask (a thermos). This vacuum makes a thermal insulation for the heat pipe located in the inner tube, The external tube being in contact with outer air is transparent, whereas the inner tube is covered with a layer of an absorber. Inside the absorption vacuum tube there is the heat pipe, heated by radiation of the absorber. The heat pipe is filled with a liquid evaporating in low temperatures already (e,g. alcohol). The absorber transfers the heat gained from solar radiation and the heat pipe heats up, and the liquid contained in it evaporates. A vapour convectively rises to a higher located tube end (a condenser), placed in a collective channel being a heat exchanger. The vapour condensing in the condenser heats it up to a significant temperature and gives up its heat to a heat-carrying agent (a solar fluid) of a solar circuit in the heat exchanger, and condenses again thereby. The condensate runs down, as a liquid medium, on an inner wall of the heat pipe and the process starts again.

Heat transfer from the condenser to the solar fluid may take place in a direct or *indirect way, i.e. the condenser may be directly dipped in the solar fluid (so called wet type*) or the condenser may be placed in a pipe (a stub pipe), which is an intermediate element in heat transfer from the condenser to the solar fluid, this pipe itself being in direct contact with the solar fluid (so called *dry type*). For example, as described in a publication "Analiza Sprawności Kolektorów S 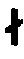 onecznych Różnych Typów" in "Czasopismo Techniczne - Chemia" - "Technical Transactions Chemistry", Wydawnictwo Politechniki Krakowskiej, 1-Ch/2009, Scientific Papers 4, Year 106, an exchanger is equipped with stub pipes enabling insertion of the condensers. The heat exchangers receive heat from a few (a dozen or so) condensers which are introduced into the inside of the exchanger, by means of the stub pipes, where the solar fluid is present. Heat exchange takes place by contact of the condensers with the stub pipes of the exchanger on the principle of thermal conduction. For providing a good durable adjacency, contacting surfaces of the two elements are covered with a thin layer of a heat conducting paste.

In Chinese Patent Application CN 101566393 (A) of 2009, a vertically located chamber, in which heat transfer from a single condenser takes place, is disclosed. The chamber is protected with a vacuum insulated shield for keeping the heat. A heat exchanger of a solar collector is created by the chambers connected with each other.

GB 2 013 870 A (priority of 1978) discloses a solar collector comprising a flat, metal plate solar radiation absorber and at least one heat pipe. The absorber plate and the heat pipe(s) form one unit. The condenser comprises a number of fins which are flushed in a heat exchange duct by heat transport medium, for example, water, of a heating system. The plate-shaped absorber and the evaporation zone of the heat pipe being accommodated in an evacuated cover tube which has a circular cross-section. In comparison to later solutions flat metal plate is used for absorption instead of vacuum tube and the condenser of heat pipe is with its fins placed straight in cooling liquid medium. Thus the exchanger is of a wet type.

US 4,299,203 patent (published in 1983) discloses a solar collector with dry type heat exchanger, with absorption vacuum tubes and heat pipes, condensers of which are connected detachably to the exchanger by the way of plugged stub pipes. There is one heat pipe placed in each absorption vacuum tube. The present invention is based on this type solar collector.

A solar collector usually comprises plurality (e.g. a dozen or so) of absorption vacuum tubes, and one heat pipe in one absorption vacuum tube is placed.

The object of the present invention is to improve energy efficiency of a solar collector with vacuum tubes.

According to the invention, an absorption vacuum tube with heat pipe comprises more than one heat pipe, and maximum ten heat pipes, preferably two to six. Preferably, the heat pipes of an individual absorption vacuum tube are placed at equal distance from each other. In another embodiment of the invention - at different distances from each other.

Preferably, the heat pipes of an individual absorption vacuum tube touch its absorption layer. In another embodiment of the invention, at least one heat pipe of an individual absorption vacuum tube does not touch its absorption layer.

According to the invention, a dry type heat exchanger of a solar collector with absorption vacuum tubes with heat pipe, the condensers of the heat pipes being located in the heat exchanger by means of plugged stub pipes, is characterized in that the plugged stub pipes are located in a wall of the heat exchanger in groups, creating stub pipe sets, an individual stub pipe set comprising two to maximum ten plugged stub pipes, preferably two to six.

The plugged stub pipes in an individual stub pipe set are preferably located on the circumference of a circle, the centre of which is on the axis of the absorption vacuum tube corresponding to the stub pipe set. Preferably, in an individual stub pipe set, a first part of the plugged stub pipes is located on the circumference of the circle, the centre of which is on the axis of the absorption vacuum tube corresponding to the stub pipe set, while a remaining part of the plugged stub pipes is located inside the circle drawn by the first part of the plugged stub pipes.

The distance between adjacent stub pipes of one stub pipe set is preferably shorter than the distance between adjacent stub pipes belonging to different stub pipe sets.

Preferably, on the plugged stub pipes radiators are located.

In a preferred embodiment of the invention, the heat exchanger consists of separate modules. In particular, the heat exchanger consists of inner modules, and of an outer inlet module and an outer outlet module. An individual inner module comprises the plugged stub pipes, preferably of one stub pipe set. In another solution of the module heat exchanger, the inner module comprises the plugged stub pipes of a few stub pipe sets, preferably not more than five.

According to the invention, a solar collector with a dry type heat exchanger, absorption vacuum tubes with heat pipe, the condensers of the heat pipes being located in the heat exchanger by means of plugged stub pipes, is characterized in that the plugged stub pipes are located in a wall of the heat exchanger in groups, creating stub pipe sets, an individual stub pipe set comprising two to maximum ten plugged stub pipes, preferably two to six, in which the condensers of the heat pipes, situated in one absorption vacuum tube, are located.

A heat exchanger of rectangular cross-section is especially suitable for the absorption vacuum tube with a larger number of the heat pipes. Other shapes are also possible, for example round in cross-section. In such case, a bottom or top longitudinal part of the heat exchanger is understood as a bottom or top wall respectively.

State of the art heat pipe in the absorption vacuum tube usually touches an absorber surface. In a solution according to the invention, the heat pipes generally also touch the absorber. However, it is also possible to locate additional heat pipes in the middle of the absorption vacuum tube, wherein they are not rested on its inner surface. Such heat pipes in the middle of the absorption vacuum tube would be heated up less effectively, but to some extent they would additionally improve its efficiency.

Considering specificity of the dry type heat exchanger it is not necessary that in each plugged stub pipe the condenser of the heat pipe is always present. The number of the plugged stub pipes is equal to the intended maximum number of the condensers of the heat pipes in the collector. Removal of individual heat pipes or the whole absorption vacuum tubes from a collector set will decrease its calorific effect, however it may be temporally purposeful.

Usually, the number of the heat pipes in one absorption vacuum tube will not exceed six, although more heat pipes, for example ten, may be used, however that requires the vacuum tube of larger diameter.

Thanks to the solution of invention, utilization of heat absorbed by the absorber sprayed on the absorption walls of the vacuum tubes is increased, as research has proved that by use of one heat pipe in the absorption vacuum tube, only not large percentage of the heat given up from the absorption surface is utilized.

Application of a few heat pipes in an individual absorption vacuum tube enables to achieve a few times higher efficiency of the heat collector with unchanged collector's dimensions; for example, use of four heat pipes increases this efficiency almost four times.

A heat exchanger, which is a structure made of one piece of a material or made of longitudinal sections, will be referred as a uniform heat exchanger in the following part of the description. A heat exchanger may be of module structure as well. Thanks to the module construction, it is possible to manufacture easily collectors of different size - it is easy to customize the number of the absorption vacuum tubes in the collector.

As mentioned above, according to the preferred version of the invention, the radiators on the plugged stub pipes are used, which increases the area of carrying away of heat, and accelerates the process.

The subject of the invention in the embodiments is shown in a drawing, in which:
Fig. 1 shows a cross-section of a collector with one absorption vacuum tube mounted to a uniform heat exchanger and a cross-section of the heat exchanger.
Fig. 2 shows a view of a bottom wall of the heat exchanger form Fig. 1.
Fig. 3 shows a longitudinal section of a heat exchanger consisting of modules.

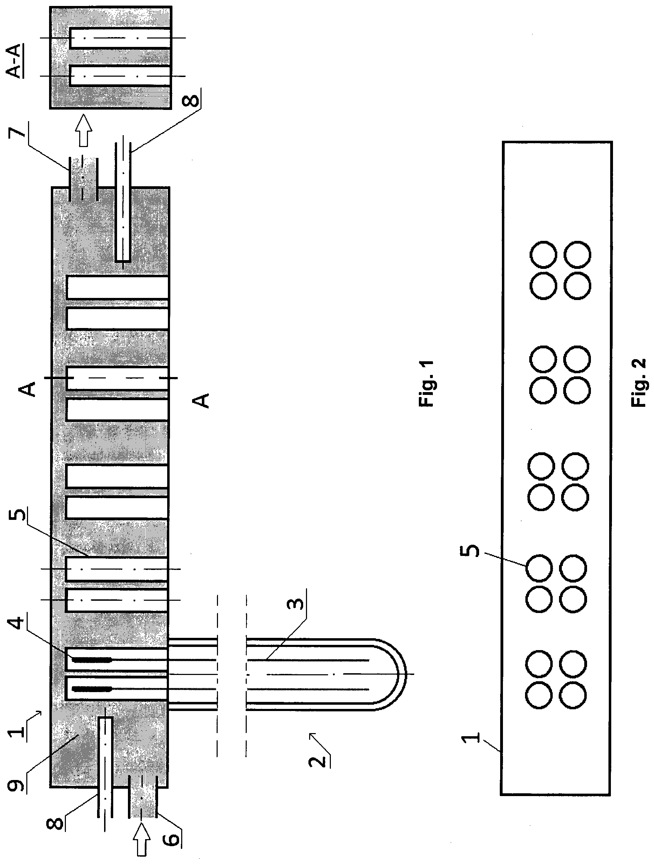

A uniform heat exchanger 1 shown in a cross-section in Fig. 1 is filled with a solar fluid 9, and an attached, for clarity only one, absorption vacuum tube 2 comprises four heat pipes 3 the condensers 4 of which are placed in plugged stub pipes 5. With a view to the distance between the heat pipes of one absorption vacuum tube 2, the plugged stub pipes 5 are located close to each other, creating a stub pipe set consisting of four plugged stub pipes 5, which is also demonstrated in a cross-section of the heat exchanger 1 in a cutting plane A-A and in a view of a bottom wall of this heat exchanger in Fig. 2. Thickness of walls of the plugged stub pipes 5 and other pipes and stub pipes as well as thickness of walls of the absorption vacuum tube is not taken into consideration in the drawing. The condensers 4 and the heat pipes 3 are illustrated schematically. In fact, the condenser fills the inside of the plugged stub pipe 5, and all heat pipes 3 in the discussed embodiment abut on an inner wall of the absorption vacuum tube 2.

The length of the exchanger is determined by the number of the stub pipe sets, and thus by the number of the absorption vacuum tubes 2, in a given collector set, which in turn is determined by the required efficiency of the collector, taking climatic factors into consideration. In the example illustrated in Fig. 1, five stub pipe sets are shown, i.e. five absorption vacuum tubes 2 are provided. In one collector set there may be one to twenty absorption vacuum tubes.

In the discussed example, an inlet 6 and outlet 7 of the solar fluid 9, and plugged temperature measurement stub pipes 8 are located in side walls of the heat exchanger 1. Another location of them, for example in the bottom wall, is also possible.

Each plugged stub pipe 5 is adapted to reception of one condenser 4 of the heat pipe 3, and all heat pipes 3, the condensers of which are placed in the plugged stub pipes 5 of a given stub pipe set, are located in one absorption vacuum tube 2. The plugged stub pipes 5 are made of a good thermal conductivity material, for example copper. While the heat exchanger may be made of thermally conductive material and insulated, or of thermally non-conductive material, for example plastic.

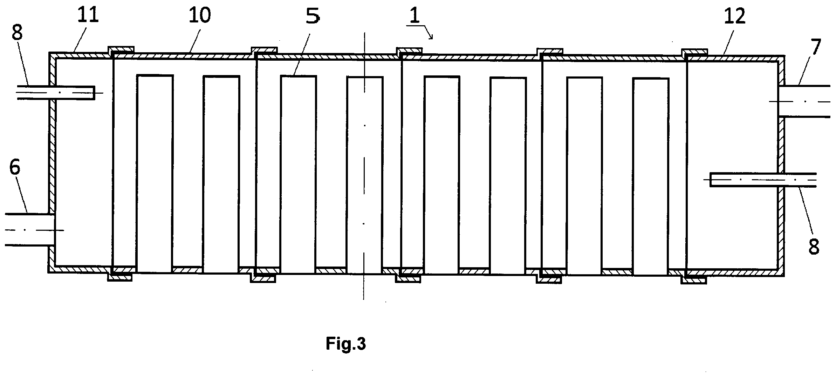

Fig. 3 shows a longitudinal section of a heat exchanger 1 consisting of modules, an outer inlet module 11, outer outlet module 12 and inner module 10 being of different structure. In the version presented in Fig. 3, in the outer inlet module 11 a pipe of an inlet 6 of a solar fluid 9 and plugged temperature measurement stub pipe 8 is attached, while in the outer outlet module 12 a pipe of an outlet 7 of the solar fluid 9 and the plugged temperature measurement stub pipe 8 is attached. In the discussed embodiment, one inner module 10 of the heat exchanger includes one stub pipe set, i.e. it functions together with one absorption vacuum tube 2. An individual inner module 10 in another embodiment may comprise a few stub pipe sets, i.e. function together with a few absorption vacuum tubes 2.

On the plugged stub pipes 5 radiators may be mounted (not shown). They may be of a round rib or other shape, placed on the plugged stub pipe, perpendicularly to its axis, at a distance from each other. They may be also made of one sheet strap spirally winding around the plugged stub pipe 5.

## Claims

1. An absorption vacuum tube (2) for use in a solar collector, the absorption vacuum tube (2) being constituted by a double transparent vacuum tube, with vacuum between an inner tube and an external tube, with the inner tube covered with a layer of an absorber, the absorption vacuum tube (2) having a heat pipe (3), a condenser of which is to be placed in a plugged stub pipe (5) of a dry type heat exchanger (1) of the solar collector, **characterised by** more than one heat pipe (3), and maximum ten heat pipes (3), preferably two to six.

2. An absorption vacuum tube according to claim 1, **characterised in that** the heat pipes (3) of the absorption vacuum tube (2) are placed at equal distance from each other.

3. An absorption vacuum tube according to claim 1, **characterised in that** the heat pipes (3) of the absorption vacuum tube (2) are placed at different distance from each other.

4. An absorption vacuum tube according to claim 1, or 2, or 3, **characterised in that** the heat pipes (3) of the absorption vacuum tube (2) touch its absorption layer.

5. An absorption vacuum tube according to claim 1, or 2, or 3, **characterised in that** at least one heat pipe (3) of the absorption vacuum tube (2) does not touch its absorption layer.

6. A dry type heat exchanger (1), for use in a solar collector with absorption vacuum tubes (2) as claimed in claim 1, wherein plugged stub pipes (5) are located in a wall of the heat exchanger (1) in groups, creating stub pipe sets, wherein each stub pipe set corresponds to condensers of the heat pipes (5) of an individual absorption vacuum tube (2), an individual stub pipe set comprising more than one plugged stub pipe (5) and maximum ten, preferably two to six, wherein the distance between adjacent stub pipes (5) of one stub pipe set is shorter than the distance between adjacent stub pipes (5) belonging to different stub pipe sets.

7. A heat exchanger according to claim 6, **characterised by** radiators located on the plugged stub pipes.

8. A heat exchanger according to claim 6, **characterised in that** the heat exchanger (1) consists of inner modules (10), and of an outer inlet module (11) and an outer outlet module (12).

9. A heat exchanger according to claim 8, **characterised in that** an individual inner module (10) comprises the plugged stub pipes (5) of one stub pipe set.

10. A heat exchanger according to claim 8, **characterised in that** an individual inner module (10) comprises the plugged stub pipes (5) of a few stub pipe sets, preferably not more than five.

11. A solar collector with absorption vacuum tubes (2) as claimed in claim 1, the condensers of which being located in a dry type heat exchanger (1) as claimed in claim 6 by means of the plugged stub pipes (5).

## Patentansprüche

1. Absorptionsvakuumrohr (2) zur Verwendung in einem Solarkollektor, wobei das Absorptionsvakuumrohr (2) durch ein doppelt transparentes Vakuumrohr mit Vakuum zwischen einem inneren Rohr und einem äußeren Rohr gebildet ist, wobei das innere Rohr mit einer Schicht eines Absorbers bedeckt ist, wobei das Absorptionsvakuumrohr (2) ein Wärmerohr (3) hat, von dem ein Kondensator in einem verstopften Stutzen (5) eines trockenen Wärmetauschers (1) des Solarkollektors abzubringen ist, **gekennzeichnet durch** mehr als ein Wärmerohr (3) und maximal zehn Wärmerohre (3), vorzugsweise zwei bis sechs.

2. Absorptionsvakuumrohr nach Anspruch 1, **dadurch gekennzeichnet, dass** die Wärmerohre (3) des Absorptionsvakuumrohres (2) in gleichem Abstand voneinander angebracht sind.

3. Absorptionsvakuumrohr nach Anspruch 1, **dadurch gekennzeichnet, dass** die Wärmerohre (3) des Absorptionsvakuumrohres (2) in unterschiedlichem Abstand voneinander angebracht sind.

4. Absorptionsvakuumrohr nach Anspruch 1, oder 2, oder 3, **dadurch gekennzeichnet, dass** die Wärmerohre (3) des Absorptionsvakuumrohres (2) seine Absorptionsschicht berühren.

5. Absorptionsvakuumrohr nach Anspruch 1, oder 2, oder 3, **dadurch gekennzeichnet, dass** mindestens ein Wärmerohr (3) des Absorptionsvakuumrohres (2) seine Absorptionsschicht nicht berührt.

6. Trockener Wärmetauscher (1) zur Verwendung in einem Solarkollektor mit Absorptionsvakuumrohren (2) nach Anspruch 1, wobei verstopfte Stutzen (5) in einer Wand des Wärmetauschers (1) in Gruppen angebracht sind und Stutzen-Sätze bilden, wobei jeder Stutzen-Satz Kondensatoren der Wärmerohre (5) einem einzelnen Absorptionsvakuumrohr (2) entspricht, einen individuellen Stutzen-Satz, der mehr als ein verstopfter Stutzen (5) und maximal zehn, vorzugsweise zwei bis sechs, aufweist, wobei der Abstand zwischen angrenzenden Stutzen (5) eines Stutzen-Satzes kürzer ist als der Abstand zwischen angrenzenden Stutzen (5), die zu verschiedenen Stutzen-Sätzen gehören.

7. Ein Wärmetauscher nach Anspruch 6, **gekennzeichnet durch** Heizkörper, die sich auf den verstopften Stutzen befinden.

8. Wärmetauscher nach Anspruch 6, **dadurch gekennzeichnet, dass** der Wärmetauscher (1) aus inneren Modulen (10) und aus einem äußeren Einlassmodul (11) und einem äußeren Auslassmodul (12) besteht.

9. Wärmetauscher nach Anspruch 8, **dadurch gekennzeichnet, dass** ein einzelnes Innenmodul (10) die verstopften Stutzen (5) eines Stutzen-Satzes umfasst.

10. Wärmetauscher nach Anspruch 8, **dadurch gekennzeichnet, dass** ein einzelnes Innenmodul (10) die verstopften Stutzen (5) einiger Stutzen-Sätze, vorzugsweise nicht mehr als fünf, umfasst.

11. Sonnenkollektor mit Absorptionsvakuumrohren (2) nach Anspruch 1, dessen Kondensatoren in einem trockenen Wärmetauscher (1) nach Anspruch 6 mit Hilfe der verstopften Stutzen (5) angebracht sind.

## Revendications

1. Tube à absorption sous vide (2) destiné à être utilisé dans un capteur solaire, ledit tube à absorption sou vide (2) étant constitué par un tube à vide double transparent, avec un vide entre un tube intérieur et un tube extérieur, le tube intérieur étant recouvert d'une couche d'un absorbeur, le tube à absorption sous vide (2) ayant un caloduc (3) dont un condenseur doit être placé dans un conduit tronqué bouché (5) d'un échangeur de chaleur de type sec (1) du capteur solaire, **caractérisé en ce qu'**il comporte plus d'un caloduc (3) et au maximum dix caloducs (3), de préférence deux à six.

2. Tube à absorption sous vide selon la revendication 1, **caractérisé en ce que** les caloducs (3) du tube à absorption sous vide (2) sont positionnés à égale distance les uns des autres.

3. Tube à absorption sous vide selon la revendication 1, **caractérisé en ce que** les caloducs (3) du tube à absorption sous vide (2) sont positionnés à une distance différente les uns des autres.

4. Tube à absorption sous vide selon la revendication 1 ou 2 ou 3 **caractérisé en ce que** les caloducs (3) du tube à absorption sous vide (2) touchent sa couche d'absorption.

5. Tube à absorption sous vide selon la revendication 1 ou 2 ou 3 **caractérisé en ce que** au moins un caloduc (3) du tube à absorption sous vide (2) ne touche pas sa couche d'absorption.

6. Échangeur de chaleur de type sec (1), destiné à être utilisé dans un capteur solaire avec des tubes à absorption sous vide (2) selon la revendication 1, dans lequel les conduits tronqués bouchés (5) sont situés dans une paroi de l'échangeur de chaleur (1) en groupes, créant des ensembles de conduits tronqués, dans lequel chaque ensemble de conduits tronqués correspond aux condenseurs des caloducs (5) d'un tube à absorption sous vide individuel (2), un ensemble de conduits tronqués individuel comprenant plus d'un conduit tronqué bouché (5) et au maximum dix, de préférence deux à six, dans lequel la distance entre les conduits tronqués adjacents (5) d'un ensemble de conduits tronqués est plus courte que la distance entre les conduits tronqués adjacents (5) appartenant à différents ensembles de conduits tronqués.

7. Échangeur de chaleur selon la revendication 6, **caractérisé en ce qu'**il comporte des radiateurs situés sur les tuyaux de raccordement bouchés.

8. Échangeur de chaleur selon la revendication 6, **caractérisé en ce que** l'échangeur de chaleur (1) se compose de modules internes (10), d'un module externe d'entrée (11) et d'un module externe de sortie (12).

9. Échangeur de chaleur selon la revendication 8, **caractérisé en ce qu'**un module intérieur individuel (10) comprend les conduits tronqués bouchés (5) d'un ensemble de conduits tronqués,

10. Échangeur de chaleur selon la revendication 8, **caractérisé en ce qu'**un module intérieur individuel (10) comprend les conduits tronqués bouchés (5) de quelques ensembles de conduits tronqués, de préférence pas plus de cinq.

11. Capteur solaire avec des tubes à absorption sous vide (2) selon la revendication 1, dont les condenseurs sont situés dans un échangeur de chaleur de type sec (1) selon la revendication 6 au moyen des conduits tronqués bouchés (5).
